# EUROPÄISCHE PATENTSCHRIFT

(11) **EP 3 032 056 B1**
(45) Veröffentlichungstag und Bekanntmachung des Hinweises auf die Patenterteilung: **18.07.2018**
(21) Anmeldenummer: 15003044.3
(22) Anmeldetag: 24.10.2015
(51) Int. Cl.: F01N 3/10, F01N 3/20, F01N 9/00, F01N 3/025, F01N 3/031, F01N 13/00, F02D 41/02, F02D 41/00, F02D 41/38, F02D 41/40

(54) **VERFAHREN UND VORRICHTUNG ZUM BETREIBEN EINES FAHRZEUGS, INSBESONDERE EINES WASSERFAHRZEUGS**
METHOD AND DEVICE FOR OPERATING A VEHICLE, IN PARTICULAR A WATER VEHICLE
PROCEDE ET DISPOSITIF DESTINES AU FONCTIONNEMENT D'UN VEHICULE, EN PARTICULIER UN BATEAU

(30) Priorität: 03.12.2014 DE 102014017789
(43) Veröffentlichungstag der Anmeldung: 15.06.2016
(73) Patentinhaber: MAN Truck & Bus AG, 80995 München (DE)
(72) Erfinder: Döring, Andreas, 82008 München (DE)
(74) Vertreter: Liebl, Thomas

(56) Entgegenhaltungen:
- EP-A1- 2 332 826
- WO-A1-2014/148256
- WO-A2-2013/121081
- DE-A1- 10 143 509
- US-A1- 2008 178 576
- US-A1- 2009 171 549

## Beschreibung

Die Erfindung betrifft ein Verfahren zum Betreiben eines Fahrzeugs, insbesondere eines Wasserfahrzeugs, nach dem Oberbegriff des Patentanspruches 1, eine Vorrichtung zum Betreiben eines Fahrzeugs, insbesondere eines Wasserfahrzeugs, nach dem Oberbegriff des Patentanspruches 8 sowie ein Fahrzeug, insbesondere ein Wasserfahrzeug, zur Durchführung des Verfahrens und/oder mit der Vorrichtung nach Patenanspruch 14. Wasserfahrzeuge, insbesondere Schiffe, überqueren regelmäßig Ländergrenzen und fahren so in Gebiete mit unterschiedlichen für die Wasserfahrzeuge geltenden Abgasvorschriften. Beispielsweise gibt es deutliche Unterschiede zwischen den auf dem offenen Meer zugelassenen Schadstoff-Emissionen und den zulässigen Schadstoff-Emissionen in küstennahen Gebieten Nordamerikas und Europas (sogenannte Emission Controlled Areas, kurz ECA). So darf beispielsweise in bestimmten ECAs aktuell nur ein Kraftstoff mit einem Schwefelgehalt von 15ppm bis 1000ppm verwendet werden, während auf dem offenen Meer ein Schwefelgehalt von 1,5% bis 3% zulässig ist. Fährt ein mit einer Brennkraftmaschine betriebenes Wasserfahrzeug in eine derartige ECA ein, wird daher üblicherweise die Kraftstoffart von hochschwefelhaltigem Kraftstoff auf niedrigschwefelhaltigem Kraftstoff umgeschaltet. Diese Umschaltung erfolgt zur Zeit manuell, das heißt durch aktiven Eingriff der Besatzung. Die manuelle Umschaltung hat jedoch zum einen eine hohe Fehlerrate aufgrund von Fehlbedienungen zur Folge. Zum anderen wird der Zeitpunkt der Umschaltung häufig nicht optimal gewählt, das heißt die Umschaltung erfolgt entweder zu früh oder zu spät. Während eine zu frühe Umschaltung beim Einfahren in eine ECA zu wirtschaftlichen Nachteilen für den Schiffsbetreiber führt, führt eine zu späte Umschaltung dazu, dass das Schiff mit zu hohen Schadstoff-Emissionen in die ECA einfährt.

Aufgrund der immer strengeren Abgasvorschriften ist es zudem erforderlich, auch an Wasserfahrzeugen Abgasnachbehandlungssysteme vorzusehen.

Aufgabe der Erfindung ist es, ein Verfahren und eine Vorrichtung zum Betreiben eines Fahrzeugs, insbesondere eines Wasserfahrzeugs, bereitzustellen, mittels denen die Schadstoffvorschriften auf einfache, kostengünstige und zuverlässige Weise eingehalten werden.

Diese Aufgabe wird durch die Merkmale der unabhängigen Ansprüche gelöst. Bevorzugte Weiterbildungen sind in den Unteransprüchen offenbart.

Die Erfindung betrifft ein Verfahren zum Betreiben eines Fahrzeugs, insbesondere eines Wasserfahrzeugs, wobei das Fahrzeug wenigstens eine, insbesondere in einem Abgas und/oder in einem Abwasser enthaltene, Schadstoffe emittierende Brennkraftmaschine aufweist, wobei mittels eines Standort-Bestimm-Systems die aktuelle Position des Fahrzeuges ermittelt wird, und wobei eine Regel- und/oder Steuereinrichtung vorgesehen ist, mittels der selbsttätig bzw. automatisch zumindest in Abhängigkeit von der ermittelten Position des Fahrzeugs und Informationen zu örtlichen Schadstoffvorschriften, insbesondere Abgas- und/oder Gewässervorschriften, die Menge wenigstens eines von der Brennkraftmaschine emittierten Schadstoffs gezielt eingestellt und/oder verstellt wird.

Durch das erfindungsgemäße Verfahren wird die Einhaltung der Schadstoffvorschriften auf zuverlässige Weise sichergestellt, da die Menge des wenigstens einen Schadstoffs in Abhängigkeit von der Position des Fahrzeuges und den in dieser Position geltenden Schadstoffvorschriften automatisch mittels der Regel- und/oder Steuereinrichtung eingestellt und/oder verstellt wird. So kann beispielsweise eine hohe Fehlerrate bei der Einstellung bzw. Verstellung der emittierten Schadstoffmenge aufgrund von manuellen Fehlbedienungen vermieden werden. Das erfindungsgemäße Verfahren ist auch besonders kostengünstig, da die emittierte Schadstoffmenge automatisch nur dann an die üblicherweise höhere Kosten verursachenden, strengeren Schadstoffvorschriften angepasst werden, wenn dies auch erforderlich ist. Des Weiteren kann das erfindungsgemäße Verfahren auf besonders einfache Weise umgesetzt werden, da Fahrzeuge, insbesondere Wasserfahrzeuge, regelmäßig bereits ein Standort-Bestimm-System zur Ermittlung der aktuellen Position des Fahrzeuges aufweisen. Auch Systeme zur Einstellung bzw. Verstellung der emittierten Schadstoffmenge sind bereits regelmäßig an Fahrzeugen vorgesehen.

Die Ermittlung der Position des Fahrzeuges kann dabei beispielsweise satellitengestützt, beispielsweise mittels des GPS-Satellitensystems, des Galileo-Satellitensystems, des Glonass-Satellitensystems oder des Compass-Satellitensystems erfolgen. Alternativ und/oder zusätzlich kann die Position des Fahrzeuges beispielsweise aber auch terrestrisch über Funksignal-Sendeeinrichtungen, insbesondere Mobilfunk-Sendeeinrichtungen oder W-LAN-Sendeeinrichtungen, ermittelt werden.

In einer bevorzugten Verfahrensführung erfolgt die selbsttätige und/oder automatische Einstellung und/oder Verstellung der Schadstoff-Menge zusätzlich in Abhängig von der Ermittlung eines Geschwindigkeit-Bestimm-System ermittelten aktuellen Fahrzeug-Geschwindigkeit und der mittels eines Fahrtrichtung-Bestimm-Systems ermittelten aktuellen Fahrzeug-Fahrrichtung. Dadurch ist es, beispielswiese beim Einfahren in eine ECA, möglich, den optimalen Zeitpunkt zur gezielten Einstellung und/oder Verstellung der emittierten Schadstoffmenge zu bestimmen. So kann das Fahrzeug, beispielsweise beim Überschreiten einer ECA-Grenze, die jeweils geltenden Schadstoffvorschriften stets genau einhalten. Es werden daher die Einstellung und/oder Verstellung der emittierten Schadstoffmenge nicht zu früh und auch nicht zu spät durchgeführt. So können die geltenden Schadstoffvorschriften auf besonders kostengünstige und zuverlässige Weise eingehalten werden.

Bevorzugt sind die Informationen zu den örtlichen Schadstoffvorschriften in der Regel- und/oder Steuereinrichtung abgespeichert, um die Informationen auf einfache und zuverlässige Weise bereitzustellen. Alternativ und/oder zusätzlich können die Informationen zu den örtlichen Schadstoffvorschriften von wenigstens einer externen Informations-Einrichtung an die Regel- und/oder Steuereinrichtung übermittelt werden. Die wenigstens eine externe Informations-Einrichtung kann dabei beispielsweise eine Umwelt- und/oder Gesundheitsbehörde sein, die beispielsweise über eine Funkverbindung datenübertragend mit der Regel- und/oder Steuereinrichtung verbunden werden kann. Durch die Übermittlung der Informationen zu den örtlichen Schadstoffvorschriften von den externen Information-Einrichtungen können auch Änderungen zu den örtlichen Schadstoffvorschriften deutlich besser berücksichtigt werden, so dass die automatische Einstellung und/oder Verstellung der emittierten Schadstoffmenge stets in Abhängigkeit von aktualisierten bzw. aktuell gültigen örtlichen Schadstoffvorschriften erfolgen kann. Sofern beispielsweise bei einer Inversionswetterlage strengere Schadstoffvorschriften in einer ECA gelten, werden diese dann automatisch von der Regel- und/oder Steuereinrichtung berücksichtigt. Bevorzugt kann zudem auch die aktuelle Schadstoffemission des Fahrzeugs von der Regel- und/oder Steuereinrichtung an eine externe Informations-Einrichtung übermittelt werden.
Vorzugsweise kann zur gezielten Einstellung und/oder Verstellung der emittierten Schadstoffmenge mittels der Regel- und/oder Steuereinrichtung wenigstens eine die Schadstoff-Menge beeinflussende Komponente des Fahrzeuges in mehrere Betriebsmodi verstellt werden, wobei die emittierte Schadstoff-Menge des Fahrzeuges in jedem Betriebsmodus unterschiedlich ist. So kann die Schadstoff-Menge auf besonders einfache und zuverlässige Weise gezielt eingestellt und/oder verstellt werden.
Bevorzugt wird zur Einstellung oder Verstellung der Schadstoff-Menge mittels der Regel- und/oder Steuereinrichtung wenigstens ein Parameter der Brennkraftmaschine verstellt und/oder eingestellt, um die emittierte Schadstoff-Menge einfach und effektiv zu verstellen und/oder einzustellen. Der wenigstens eine Parameter kann dabei beispielsweise das Verbrennungsluftverhältnis und/oder die Anzahl der Einspritzungen und/oder die mittels einer Abgasrückführung rückgeführte Abgasmenge und/oder der Einspritzdruck und/oder der Einspritzverlauf sein. Erfindungsgemäss wird zur Einstellung und/oder Verstellung der Schadstoff-Menge mittels der Regel- und/oder Steuereinrichtung wenigstens ein Parameter eines Abgasnachbehandlungssystems des Fahrzeuges verstellt und/oder eingestellt. Auch dadurch kann die Schadstoff-Menge einfach und effektiv eingestellt und/oder verstellt werden. Der wenigstens eine Parameter ist die durch einen Abgas-Wäscher geleitete Abwassermenge und/oder die vom als Wasserfahrzeug ausgebildeten Fahrzeug, aus einem Abgas-Wäscher, ins Gewässer geleitete Abwassermenge und/oder der pH-Wert des vom als Wasserfahrzeug ausgebildeten Fahrzeug, aus einem Abgas-Wäscher, ins Gewässer geleiteten Abwassers.

Zusätzlich kann beispielsweise der wenigstens eine Parameter des Abgasnachbehandlungssystems auch das Verbrennungsluftverhältnis und/ oder die zugeführte Reduktionsmittel-Menge eines SCR-Katalysators des Abgasnachbehandlungssystems und/oder die Regeneration eines Partikelfilters des Abgasnachbehandlungssystems und/oder ein Abgasstrom durch eine Bypass-Einrichtung des Abgasnachbehandlungssystems sein. Weiter alternativ und/oder zusätzlich kann zur Einstellung und/oder Verstellung der Schadstoff-Menge mittels der Regel- und/oder Steuereinrichtung auch die der Brennkraftmaschine zugeführte Kraftstoffart eingestellt und/oder verstellt werden. Zur Lösung der bereits genannten Aufgabenstellung wird ferner eine Vorrichtung zum Betreiben eines Fahrzeugs, insbesondere eines Wasserfahrzeugs vorgeschlagen, wobei das Fahrzeug wenigstens eine, insbesondere in einem Abgas und/oder in einem Abwasser enthaltene, Schadstoffe emittierende Brennkraftmaschine aufweist, wobei ein Standort-Bestimm-System vorgesehen ist, mittels dem die aktuelle Position des Fahrzeuges ermittelt werden kann, und wobei eine Regel- und/oder Steuereinrichtung vorgesehen ist, mittels der selbsttätig und/oder automatisch zumindest in Abhängigkeit von der ermittelten Position des Fahrzeugs und Informationen zu örtlichen Schadstoffvorschriften, insbesondere Abgas- und/oder Gewässervorschriften, die Menge wenigstens eines von der Brennkraftmaschine emittierten Schadstoffs gezielt eingestellt und/oder verstellt werden kann.
Die sich durch die erfindungsgemäße Vorrichtung und die darauf rückbezogenen Unteransprüche ergebenen Vorteile sind identisch mit den bereits gewürdigten Vorteilen des erfindungsgemäßen Verfahrens, so dass diese an dieser Stelle nicht wiederholt werden.
Ferner wird ein Fahrzeug, insbesondere ein Wasserfahrzeug, zur Durchführung des erfindungsgemäßen Verfahrens und/oder mit der erfindungsgemäßen Vorrichtung beansprucht. Die sich hieraus ergebenden Vorteile sind ebenfalls identisch mit den bereits gewürdigten Vorteilen des erfindungsgemäßen Verfahrens, so dass auch diese an dieser Stelle nicht wiederholt werden.

Die vorstehenden erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und/oder Weiterbildungen sowie deren Vorteile werden nachfolgend anhand von Zeichnungen lediglich beispielhaft näher erläutert.

Es zeigen:
- Fig. 1: in einer schematischen Darstellung von oben ein auf einen Küstenbereich zufahrendes Schiff, und
- Fig. 2: in einer schematischen Darstellung ein Antriebssystem des Schiffs.

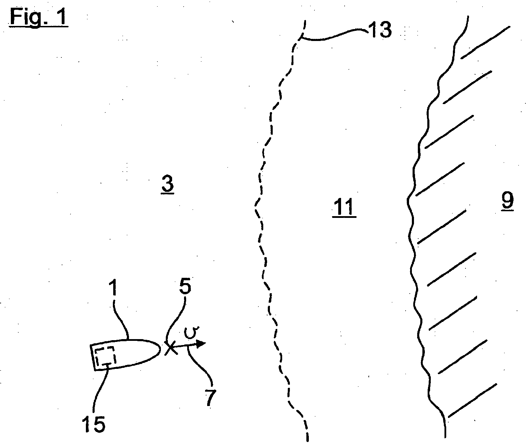

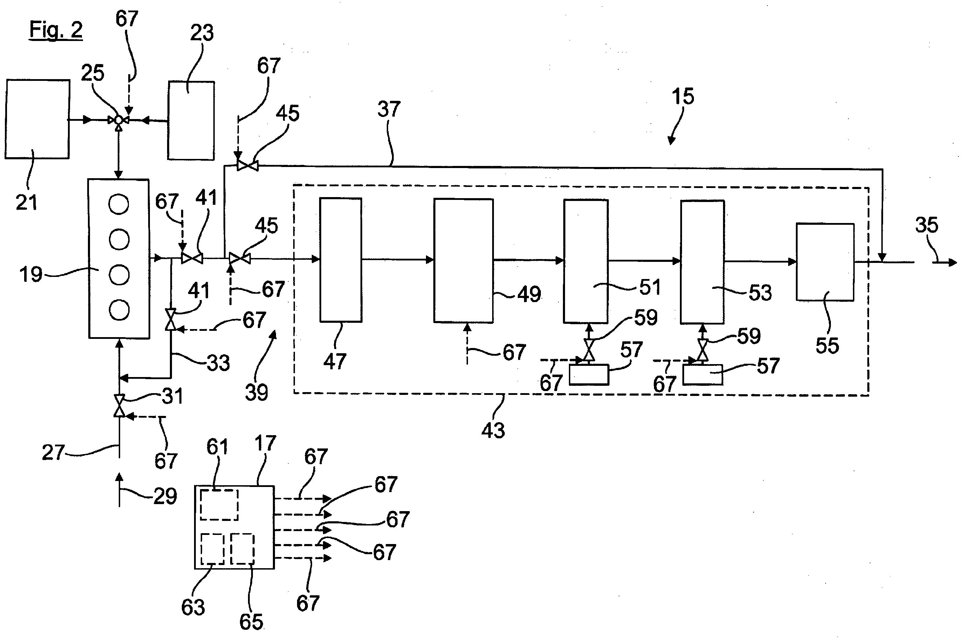

In Fig. 1 ist ein beispielhaft als Schiff 1 ausgebildetes Fahrzeug gezeigt. Das Schiff 1 befindet sich hier auf einem Gewässer 3 in einer Position 5 und bewegt sich mit einer Geschwindigkeit v in Fahrrichtung 7 auf eine Küste 9 zu. In einem küstennahen Bereich des Gewässers 3 befindet sich eine sogenannte Emission Controlled Area 11 (ECA), die sich ausgehend von der Küste 9 über eine definierte Distanz bis hin zu einer mit gestrichelten Linie angedeuteten Begrenzung 13 erstreckt. Bei der in Fig. 1 gezeigten Darstellung befindet sich das Schiff 1 noch außerhalb der ECA 11, es ist jedoch auf dem Weg in die ECA 11. In der küstennahen ECA 11 gelten strengere Abgasvorschriften für das Schiff 1 als außerhalb der ECA 11 auf dem Gewässer 3. Um die Abgasvorschriften in der ECA 11 einzuhalten und gleichzeitig auch einen kostengünstigen Betrieb des Schiffs 1 sicherzustellen, weist eine in Fig. 1 mit gestrichelten Linien angedeutete Antriebseinrichtung 15 des Schiffs 1 eine Regel- und/oder Steuereinrichtung 17 (Fig. 2) auf, mittels der die Menge der Schadstoffe eines Abgases (Pfeil 35, Fig. 2) der Antriebseinrichtung 15 den geltenden örtlichen Abgasvorschriften entsprechend gezielt eingestellt werden können.

Der Aufbau und die Funktionsweise der Antriebseinrichtung 15 wird im Folgenden anhand der Fig. 2 näher erläutert:

Wie in Fig. 2 gezeigt ist, weist die Antriebseinrichtung 15 des Schiffs 1 eine Brennkraftmaschine 19 auf, die hier mit mehreren, hier beispielhaft zwei, Kraftstofftanks 21 und 23 gekoppelt ist. Der Kraftstofftank 21 weist dabei einen Kraftstoff mit einem hohen Schwefelgehalt, beispielsweise 1,5% bis 3%, auf, während der Kraftstofftank 23 einen Kraftstoff mit einem niedrigen Schwefelgehalt, beispielsweise 15ppm bis 1000ppm, aufweist. Zudem ist hier ein Mehrwege-Ventil 25 vorgesehen, an das sowohl die Kraftstofftanks 23 als auch die Brennkraftmaschine 19 angeschlossen sind. In einer ersten Ventilstellung des Mehrwege-Ventils 25 ist dabei der Kraftstoffstrom von dem Kraftstofftank 21 zu der Brennkraftmaschine 19 freigegeben, während der Kraftstoffstrom von dem Kraftstofftank 23 zu der Brennkraftmaschine 19 gesperrt ist. In einer zweiten Ventilstellung des Mehrwege-Ventils 25 ist der Kraftstoffstrom von dem Kraftstofftank 21 zu der Brennkraftmaschine 19 gesperrt, während der Kraftstoffstrom von dem Kraftstofftank 23 zu der Brennkraftmaschine 19 freigegeben ist.

Wie aus Fig. 2 weiter hervorgeht, weist die Antriebseinrichtung 15 einen Ansaugtrakt 27 auf, mittels dem der Brennkraftmaschine 19 Verbrennungsluft (Pfeil 29) zugeführt wird. In dem Ansaugtrakt 27 ist ein stufenlos verstellbares Durchgangsventil, hier beispielhaft eine Drosselklappe 31, angeordnet, mittels der die Zufuhr der Verbrennungsluft 29 in die Brennkraftmaschine 19 gesteuert wird. Weiter weist die Antriebseinrichtung 15 optional auch eine Abgasrückführung 33 auf, mittels der ein Teil eines von der Brennkraftmaschine 19 emittierten Abgases in den Ansaugtrakt 27 rückgeführt werden kann. Das Abgas wird dabei, in Abgas-Strömungsrichtung gesehen, stromab der Brennkraftmaschine 19 und stromauf einer Bypass-Einrichtung 37 aus einem Abgasstrang 39 der Antriebseinrichtung 15 abgezweigt und, in Luft-Strömungsrichtung gesehen, stromab der Drosselklappe 31 und stromauf der Brennkraftmaschine 19 in den Ansaugtrakt 27 der Antriebseinrichtung 15 eingeleitet. Zur Einstellung der rückgeführten Abgasmenge sind hier beispielhaft zwei stufenlos verstellbare Durchgangsventile 41 vorgesehen. Eines der Durchgangsventile 41 ist dabei, in Abgas-Strömungsrichtung gesehen stromab der Abgasrückführung 33 und stromauf der Bypass-Einrichtung 37 in dem Abgasstrang 39 angeordnet. Das andere der Durchgangsventile 41 ist in der Abgasrückführung 33 angeordnet.

Des Weiteren kann mittels der Bypass-Einrichtung 37 zumindest ein Teil des Abgasstroms der Brennkraftmaschine 19 an einem Abgasnachbehandlungssystems 43 der Antriebseinrichtung 15 vorbeigeleitet werden. Die Einstellung der an dem Abgasnachbehandlungssystem 43 vorbeigeführten Abgasmenge erfolgt hier beispielhaft mittels zweier stufenlos verstellbarer Durchgangsventile 45. Eines der Durchgangsventile 45 ist dabei, in Abgas-Strömungsrichtung gesehen, stromab der Bypass-Einrichtung 37 und stromauf des Abgasnachbehandlungssystems 43 in dem Abgasstrang 39 angeordnet, während das andere der Durchgangsventile 45 in der Bypass-Einrichtung 37 angeordnet ist.

Wie in Fig. 2 weiter gezeigt ist, weist das Abgasnachbehandlungssystem 43, hier lediglich beispielhaft, mehrere Komponenten auf. So weist das Abgasnachbehandlungssystem 43 hier, in Abgas-Strömungsrichtung gesehen, nacheinander angeordnet einen Oxidationskatalysator 47, einen Partikelfilter 49, einen ersten SCR-Katalysator 51, einen zweiten SCR-Katalysator 53 und einen Ammoniak-Sperrkatalysator 55 auf. Der Partikelfilter 49 kann dabei in einer definiert einstellbaren Frequenz und über ein definiert einstellbares Zeitintervall regeneriert werden, wobei beispielsweise die in dem Partikelfilter 49 eingelagerten Partikel verbrannt werden. An die SCR-Katalysatoren 51 und 53 ist jeweils ein mit einem Reduktionsmittel befüllter Behälter 57 angeschlossen. Mittels des Reduktionsmittels können die SCR-Katalysatoren 51 und 53 die Stickoxide im Abgas 35 effektiv reduzieren. Das Reduktionsmittel kann dabei beispielsweise eine wässrige Harnstofflösung sein. Zur Einstellung der in die SCR-Katalysatoren 51 und 53 eingeleiteten Menge an Reduktionsmittel sind hier beispielweise stufenlos verstellbare Durchgangsventile 59 vorgesehen.

Weiter weist die bereits erwähnte Regel- und/oder Steuereinrichtung 17 der Antriebseinrichtung 15 ein mit gestrichelten Linien angedeutetes Standort-Bestimm-System 61 auf, mittels dem die aktuelle Position des Schiffs 1 ermittelt werden kann. Die Ermittlung der aktuellen Position kann dabei beispielsweise sattelitengestützt mit Hilfe des GPS-Satellitensystems, des Galileo-Satellitensystems, des Glonass-Satellitensystems und/oder des Kompass-Satellitensystems erfolgen. Ebenso kann die Position des Schiffs 1 aber beispielsweise auch terrestrisch über Funksignal-Sendeeinrichtung, beispielsweise Mobilfunkmasten oder W-LAN-Sendeeinrichtungen, ermittelt werden. Aus den mittels des Standort-Bestimm-Systems 61 ermittelten Positionen des Schiffs können dann mittels der Regel- und/oder Steuereinrichtung 17 auch die Geschwindigkeit und die Fahrrichtung des Schiffs 1 ermittelt werden.

Zudem weist die Regel- und/oder Steuereinrichtung 17 hier auch eine mit gestrichelten Linien dargestellte Sende- und/oder Empfangseinrichtung 63 auf, mittels der Informationen zu örtlichen Abgasvorschriften, hier beispielhaft die Abgasvorschriften in der ECA 11 und die Abgasvorschriften außerhalb der ECA 11 auf dem Gewässer 3, von externen Informations-Einrichtungen, beispielsweise Umwelt- oder Gesundheitsbehörden, empfangen werden können. Die empfangenen Informationen werden dann an eine datenübertragend mit der Sende- und/oder Empfangseinrichtung 63 gekoppelte, in Fig. 2 ebenfalls mit gestrichelten Linien dargestellte Speichereinrichtung 65 der Regel- und/oder Steuereinrichtung 17 übermittelt und dort abgespeichert.

Weiter ist die Regel- und/oder Steuereinrichtung 17 auch derart signaltechnisch mit den genannten Ventileinrichtungen 25, 41, 45 und 59 gekoppelt, dass diese Ventileinrichtungen mittels der Regel- und/oder Steuereinrichtung 17 gesteuert werden können. Ebenso ist die Regel- und/oder Steuereinrichtung 17 auch mit dem Partikelfilter 49 signaltechnisch gekoppelt, so dass mittels der Regel- und/oder Steuereinrichtung 17 auch die Frequenz und die Zeitdauer der Regeneration des Partikelfilters 49 gesteuert werden können. Die Steuerung der genannten Komponenten mittels der Regel- und/oder Steuereinrichtung 17 erfolgt dabei mittels in Fig. 2 mit gestrichelten Linien angedeuteten Steuersignalen 67.

In Abhängigkeit von der Position, der Geschwindigkeit und der Fahrrichtung des Schiffs 1 und in Abhängigkeit von den Informationen zu den örtlichen Abgasvorschriften ermittelt die Regel- und/oder Steuereinrichtung 17 selbsttätig bzw. automatisch den optimalen Zeitpunkt und geeignete Maßnahmen, das heißt eine geeignete Steuerung mittels der Steuersignale 67, zur gezielten Einstellung und/oder Verstellung der Schadstoff-Menge in dem von der Antriebseinrichtung 15 emittierten Abgas 35 und führt diese Maßnahme selbsttätig bzw. automatisch aus.

### Bezugszeichenliste

- 1: Schiff
- 3: Gewässer
- 5: Position
- 7: Fahrrichtung
- 9: Küste
- 11: ECA
- 13: Begrenzung
- 15: Antriebseinrichtung
- 17: Regel- und/oder Steuereinrichtung
- 19: Brennkraftmaschine
- 21: Kraftstofftank
- 23: Kraftstofftank
- 25: Mehrwege-Ventil
- 27: Ansaugtrakt
- 29: Verbrennungsluft
- 31: Drosselklappe
- 33: Abgasrückführung
- 35: Abgas
- 37: Bypass-Einrichtung
- 39: Abgasstrang
- 41: Durchgangsventil
- 43: Abgasnachbehandlungssystem
- 45: Durchgangsventil
- 47: Oxidationskatalysator
- 49: Partikelfilter
- 51: SCR-Katalysator
- 53: SCR-Katalysator
- 55: Ammoniak-Sperrkatalysator
- 57: Behälter
- 59: Durchgangsventil
- 61: Standort-Bestimm-System
- 63: Sende- und/oder Empfangseinrichtung
- 65: Speichereinrichtung
- 67: Steuersignal

## Patentansprüche

1. Verfahren zum Betreiben eines Fahrzeugs, insbesondere eines Wasserfahrzeugs, wobei das Fahrzeug (1) wenigstens eine, insbesondere in einem Abgas und/oder in einem Abwasser enthaltene, Schadstoffe (35) emittierende Brennkraftmaschine (19) aufweist, wobei mittels eines Standort-Bestimm-Systems (61) die aktuelle Position (5) des Fahrzeuges (1) ermittelt wird, wobei eine Regel- und/oder Steuereinrichtung (17) vorgesehen ist, mittels der selbsttätig und/oder automatisch zumindest in Abhängigkeit von der ermittelten Position (5) des Fahrzeugs (1) und Informationen zu örtlichen Schadstoffvorschriften, insbesondere Abgas- und/oder Gewässervorschriften, die Menge wenigstens eines von der Brennkraftmaschine (19) emittierten Schadstoffs gezielt eingestellt und/oder verstellt wird, wobei zur Einstellung und/oder Verstellung der Schadstoff-Menge mittels der Regel- und/oder Steuereinrichtung (17) wenigstens ein Parameter eines Abgasnachbehandlungssystems (43) des Fahrzeugs (1) verstellt und/oder eingestellt wird, **dadurch gekennzeichnet, dass** der wenigstens eine Parameter des Abgasnachbehandlungssystems (43) zumindest die durch einen Abgas-Wäscher des Abgasnachbehandlungssystems (43) geleitete Abwassermenge und/oder die vom als Wasserfahrzeug ausgebildeten Fahrzeug ins Gewässer geleitete Abwassermenge und/oder der pH-Wert des vom als Wasserfahrzeug ausgebildeten Fahrzeug ins Gewässer geleiteten Abwassers ist.

2. Verfahren nach Anspruch 1, **dadurch gekennzeichnet, dass** die selbsttätige und/oder automatische Einstellung und/oder Verstellung der Schadstoff-Menge zusätzlich in Abhängigkeit von der mittels eines Geschwindigkeit-Bestimm-Systems (17, 61) ermittelten aktuellen Fahrzeug-Geschwindigkeit (v) und der mittels eines Fahrrichtung-Bestimm-Systems (17, 61) ermittelten aktuellen Fahrzeug-Fahrrichtung (7) erfolgt.

3. Verfahren nach Anspruch 1 oder 2, **dadurch gekennzeichnet, dass** die Informationen zu den örtlichen Schadstoffvorschriften in der Regel- und/oder Steuereinrichtung (17) abgespeichert sind, und/oder dass die Informationen zu den örtlichen Schadstoffvorschriften von wenigstens einer externen Informations-Einrichtung an die Regel- und/oder Steuereinrichtung (17) übermittelt werden, und/oder dass die aktuelle Schadstoffemission des Fahrzeugs von der Regel- und/oder Steuereinrichtung (17) an eine externe Informations-Einrichtung übermittelt wird.

4. Verfahren nach einem der vorhergehenden Ansprüche, **dadurch gekennzeichnet, dass** zur gezielten Einstellung und/oder Verstellung der Schadstoff-Menge mittels der Regel- und/oder Steuereinrichtung (17) wenigstens eine, die Schadstoff-Menge der Brennkraftmaschine (19) beeinflussende Komponente des Fahrzeuges (1) in mehrere Betriebsmodi verstellt werden kann, wobei die emittierte Schadstoff-Menge der Brennkraftmaschine (19) in jedem Betriebsmodus unterschiedlich ist.

5. Verfahren nach einem der vorhergehenden Ansprüche, **dadurch gekennzeichnet, dass** zur Einstellung und/oder Verstellung der Schadstoff-Menge mittels der Regel- und/oder Steuereinrichtung (17) wenigstens ein Parameter der Brennkraftmaschine (19) verstellt und/oder eingestellt wird, wobei bevorzugt vorgesehen ist, dass dieser Parameter das Verbrennungsluftverhältnis und/oder die Anzahl der Einspritzungen und/oder die mittels einer Abgasrückführung (33) rückgeführte Abgasmenge und/oder der Einspritzdruck und/oder der Einspritzverlauf ist.

6. Verfahren nach einem der vorhergehenden Ansprüche, **dadurch gekennzeichnet, dass** zusätzlich der wenigstens eine Parameter des Abgasnachbehandlungssystems (43) das Verbrennungsluftverhältnis und/oder die zugeführte Reduktionsmittel-Menge eines SCR-Katalysators (51, 53) des Abgasnachbehandlungssystems (43) und/oder die Regeneration eines Partikelfilters (49) des Abgasnachbehandlungssystems (43) und/oder ein Abgasstrom durch eine Bypass-Einrichtung (37) des Abgasnachbehandlungssystems (43) ist.

7. Verfahren nach einem der vorhergehenden Ansprüche, **dadurch gekennzeichnet, dass** zur Einstellung und/oder Verstellung der Schadstoff-Menge mittels der Regel- und/oder Steuereinrichtung (17) die der Brennkraftmaschine (19) zugeführte Kraftstoffart eingestellt und/oder verstellt wird.

8. Vorrichtung zum Betreiben eines Fahrzeugs, insbesondere eines Wasserfahrzeugs, wobei das Fahrzeug (1) wenigstens eine, insbesondere in einem Abgas und/oder in einem Abwasser enthaltene, Schadstoffe (35) emittierende Brennkraftmaschine (19) aufweist, wobei ein Standort-Bestimm-System (61) vorgesehen ist, mittels dem die aktuelle Position (5) des Fahrzeuges (1) ermittelbar ist, wobei eine Regel- und/oder Steuereinrichtung (17) vorgesehen ist, mittels der selbsttätig und/oder automatisch zumindest in Abhängigkeit von der ermittelten Position (5) des Fahrzeugs (1) und Informationen zu örtlichen Schadstoffvorschriften, insbesondere Abgas- und/oder Gewässervorschriften, die Menge wenigstens eines von der Brennkraftmaschine (19) emittierten Schadstoffs gezielt einstellbar und/oder verstellbar ist, wobei ein Abgasnachbehandlungssystem (43) des Fahrzeuges (1) wenigstens eine in mehrere Stell-Positionen verlagerbare Stelleinrichtung (41, 45, 59) aufweist, durch deren Verlagerung wenigstens ein die Schadstoff-Menge beeinflussender Parameter des Abgasnachbehandlungssystems (43) verstellbar und/oder einstellbar ist, wobei die Verlagerung der Stelleinrichtung (41, 45, 59) mittels der Regel- und/oder Steuereinrichtung (17) regelbar und/oder steuerbar ist, **dadurch gekennzeichnet, dass** der wenigstens eine Parameter des Abgasnachbehandlungssystems (43) zumindest die durch einen Abgas-Wäscher des Abgasnachbehandlungssystems (43) geleitete Abwassermenge und/oder die vom als Wasserfahrzeug ausgebildeten Fahrzeug ins Gewässer geleitete Abwassermenge und/oder der pH-Wert des vom als Wasserfahrzeug ausgebildeten Fahrzeug ins Gewässer geleiteten Abwassers ist.

9. Vorrichtung nach Anspruch 8, **dadurch gekennzeichnet, dass** ein Geschwindigkeit-Bestimm-System (17, 61) zur Ermittlung der Fahrzeug-Geschwindigkeit (v) und ein Fahrrichtung-Bestimm-System (17, 61) zur Ermittlung der Fahrzeug-Fahrrichtung (7) vorgesehen sind, und dass die Schadstoff-Menge zusätzlich in Abhängigkeit von der ermittelten aktuellen Fahrzeug-Geschwindigkeit (v) und der ermittelten aktuellen Fahrzeug-Fahrrichtung (7) mittels der Regel- und/oder Steuereinrichtung (17) einstellbar und/oder verstellbar ist.

10. Vorrichtung nach Anspruch 8 oder 9, **dadurch gekennzeichnet, dass** die Regel- und/oder Steuereinrichtung (17) eine Speichereinrichtung (65) aufweist, in der die Informationen zu den örtlichen Schadstoffvorschriften abgespeichert sind, und/oder dass die Regel- und/oder Steuereinrichtung (17) eine Sende- und/oder Empfangseinrichtung (63) aufweist, mittels der die Informationen zu den örtlichen Schadstoffvorschriften von einer externen Informations-Einrichtung an die Regel- und/oder Steuereinrichtung (17) übermittelbar sind, und/oder mittels der die aktuelle Schadstoffemission des Fahrzeugs von der Regel- und/oder Steuereinrichtung (17) an eine externe Informations-Einrichtung übermittelt wird.

11. Vorrichtung nach einem der Ansprüche 8 bis 10, **dadurch gekennzeichnet, dass** die Brennkraftmaschine (19) wenigstens eine in mehrere Stell-Positionen verlagerbare Stelleinrichtung (31) aufweist, durch deren Verlagerung wenigstens ein die Schadstoff-Menge beeinflussender Parameter der Brennkraftmaschine (19) verstellbar und/oder einstellbar ist, wobei die Verlagerung der Stelleinrichtung (31) mittels der Regel- und/oder Steuereinrichtung (17) regelbar und/oder steuerbar ist.

12. Vorrichtung nach einem der Ansprüche 8 bis 11, **dadurch gekennzeichnet, dass** das Abgasnachbehandlungssystem (43) wenigstens eine Bypass-Einrichtung (37) aufweist, mittels der wenigstens ein Teil des Abgasstroms an wenigstens einem Abgasnachbehandlungselement (47, 49, 51, 53, 55), insbesondere an wenigstens einem SCR-Katalysator und/oder an wenigstens einer Entschwefelungs-Einrichtung, des Abgasnachbehandlungssystems (43) vorbeiführbar und/oder vorbeileitbar ist, und dass eine Ventileinrichtung (45) als Stelleinrichtung vorgesehen ist, mittels der der Abgasstrom durch die Bypass-Einrichtung (37) und durch das wenigstens eine Abgasnachbehandlungselement (47, 49, 51, 53, 55) verstellbar und/oder einstellbar ist.

13. Vorrichtung nach einem der Ansprüche 8 bis 12, **dadurch gekennzeichnet, dass** eine in mehrere Stell-Positionen verlagerbare Stelleinrichtung (25) vorgesehen ist, durch deren Verlagerung die der Brennkraftmaschine (19) zugeführte Kraftstoffart verstellbar und/oder einstellbar ist, wobei die Verlagerung der Stelleinrichtung (25) mittels der Regel- und/oder Steuereinrichtung (17) regelbar und/oder steuerbar ist.

14. Fahrzeug, insbesondere Wasserfahrzeug, zur Durchführung eines Verfahrens nach einem der Ansprüche 1 bis 7 und/oder mit einer Vorrichtung nach einem der Ansprüche 8 bis 13.

## Claims

1. Method for operating a vehicle, in particular a watercraft, wherein the vehicle (1) has at least one combustion engine (19), in particular a combustion engine which emits pollutants (35) contained in an exhaust gas and/or in wastewater, wherein the current position (5) of the vehicle (1) is determined by means of a location determination system (61), wherein a closed-loop and/or open-loop control device (17) is provided, by means of which the quantity of at least one pollutant emitted by the combustion engine (19) is selectively set and/or adjusted in a self-acting and/or automatic way, at least in accordance with the determined position (5) of the vehicle (1) and with information on local pollutant regulations, in particular exhaust and/or water regulations, wherein, for setting and/or adjustment of the pollutant quantity by means of the closed-loop and/or open-loop control device (17), at least one parameter of an exhaust gas aftertreatment system (43) of the vehicle (1) is adjusted and/or set, **characterized in that** the at least one parameter of the exhaust gas aftertreatment system (43) is at least the wastewater quantity passed through an exhaust gas scrubber of the exhaust gas aftertreatment system (43) and/or the wastewater quantity passed into the body of water by the vehicle designed as a watercraft and/or the pH of the wastewater passed into the body of water by the vehicle designed as a watercraft.

2. Method according to Claim 1, **characterized in that** the self-acting and/or automatic setting and/or adjustment of the pollutant quantity additionally takes place in accordance with the current vehicle speed (v), determined by means of a speed determination system (17, 61), and the current vehicle direction of travel (7), determined by means of a direction of travel determination system (17, 61).

3. Method according to Claim 1 or 2, **characterized in that** the information on the local pollutant regulations is stored in the closed-loop and/or open-loop control device (17), and/or **in that** the information on the local pollutant regulations is communicated to the closed-loop and/or open-loop control device (17) by at least one external information system, and/or **in that** the current pollutant emissions of the vehicle are communicated to an external information system by the closed-loop and/or open-loop control device (17).

4. Method according to one of the preceding claims, **characterized in that,** for selective setting and/or adjustment of the pollutant quantity by means of the closed-loop and/or open-loop control device (17), at least one component of the vehicle (1) which affects the pollutant quantity of the combustion engine (19) can be adjusted to a plurality of operating modes, wherein the pollutant quantity emitted by the combustion engine (19) is different in each operating mode.

5. Method according to one of the preceding claims, **characterized in that**, for setting and/or adjustment of the pollutant quantity by means of the closed-loop and/or open-loop control device (17), at least one parameter of the combustion engine (19) is adjusted and/or set, wherein it is preferably envisaged that said parameter is the combustion air ratio and/or the number of injections and/or the exhaust gas quantity recirculated by means of an exhaust gas recirculation system (33) and/or the injection pressure and/or the injection characteristic.

6. Method according to one of the preceding claims, **characterized in that**, in addition, at least one parameter of the exhaust gas aftertreatment system (43) is the combustion air ratio and/or the supplied reducing agent quantity for an SCR catalyst (51, 53) of the exhaust gas aftertreatment system (43) and/or the regeneration of a particulate filter (49) of the exhaust gas aftertreatment system (43) and/or an exhaust gas flow through a bypass device (37) of the exhaust gas aftertreatment system (43).

7. Method according to one of the preceding claims, **characterized in that**, for setting and/or adjustment of the pollutant quantity by means of the closed-loop and/or open-loop control device (17), the type of fuel supplied to the combustion engine (19) is set and/or adjusted.

8. Apparatus for operating a vehicle, in particular a watercraft, wherein the vehicle (1) has at least one combustion engine (19), in particular a combustion engine which emits pollutants (35) contained in an exhaust gas and/or in wastewater, wherein a location determination system (61) is provided, by means of which the current position (5) of the vehicle (1) can be determined, wherein a closed-loop and/or open-loop control device (17) is provided, by means of which the quantity of at least one pollutant emitted by the combustion engine (19) can be selectively set and/or adjusted in a self-acting and/or automatic way, at least in accordance with the determined position (5) of the vehicle (1) and with information on local pollutant regulations, in particular exhaust and/or water regulations, wherein an exhaust gas aftertreatment system (43) of the vehicle (1) has at least one final control device (41, 45, 59), which can be shifted into a plurality of control positions and by means of the shifting of which at least one parameter of the exhaust gas aftertreatment system (43) which affects the pollutant quantity can be adjusted and/or set, wherein the shifting of the final control device (41, 45, 59) can be subjected to closed-loop and/or open-loop control by the closed-loop and/or open-loop control device (17), **characterized in that** the at least one parameter of the exhaust gas aftertreatment system (43) is at least the wastewater quantity passed through an exhaust gas scrubber of the exhaust gas aftertreatment system (43) and/or the wastewater quantity passed into the body of water by the vehicle designed as a watercraft and/or the pH of the wastewater passed into the body of water by the vehicle designed as a watercraft.

9. Apparatus according to Claim 8, **characterized in that** a speed determination system (17, 61) for determining the vehicle speed (v) and a direction of travel determination system (17, 61) for determining the vehicle direction of travel (7) are provided, and **in that** the pollutant quantity can additionally be set and/or adjusted by means of the closed-loop and/or open-loop control device (17) in accordance with the determined current vehicle speed (v) and the determined current vehicle direction of travel (7).

10. Apparatus according to Claim 8 or 9, **characterized in that** the closed-loop and/or open-loop control device (17) has a storage device (65), in which the information on the local pollutant regulations is stored, and/or **in that** the closed-loop and/or open-loop control device (17) has a transmitting and/or receiving device (63), by means of which the information on the local pollutant regulations can be communicated to the closed-loop and/or open-loop control device (17) by an external information system, and/or by means of which the current pollutant emissions of the vehicle can be communicated to an external information system by the closed-loop and/or open-loop control device (17).

11. Apparatus according to one of Claims 8 to 10, **characterized in that** the combustion engine (19) has at least one final control device (31), which can be shifted into a plurality of control positions and by means of the shifting of which at least one parameter of the combustion engine (19) which affects the pollutant quantity can be adjusted and/or set, wherein the shifting of the final control device (31) can be subjected to closed-loop and/or open-loop control by the closed-loop and/or open-loop control device (17).

12. Apparatus according to one of Claims 8 to 11, **characterized in that** the exhaust gas aftertreatment system (43) has at least one bypass device (37), by means of which at least some of the exhaust gas flow can be guided past and/or carried past at least one exhaust gas aftertreatment element (47, 49, 51, 53, 55), in particular past at least one SCR catalyst and/or past at least one desulphurization device, of the exhaust gas aftertreatment system (43), and **in that** a valve device (45) is provided as a final control device, by means of which the exhaust gas flow through the bypass device (37) and through the at least one exhaust gas aftertreatment element (47, 49, 51, 53, 55) can be adjusted and/or set.

13. Apparatus according to one of Claims 8 to 12, **characterized in that** a final control device (25) that can be shifted into a plurality of control positions is provided, by means of the shifting of which the type of fuel supplied to the combustion engine (19) can be adjusted and/or set, wherein the shifting of the final control device (25) can be subjected to closed-loop and/or open-loop control by the closed-loop and/or open-loop control device (17).

14. Vehicle, in particular a watercraft, for carrying out a method according to one of Claims 1 to 7 and/or having an apparatus according to one of Claims 8 to 13.

## Revendications

1. Procédé destiné au fonctionnement d'un véhicule, notamment d'un bateau, dans lequel le véhicule (1) comporte au moins un moteur à combustion interne (19) émettant des polluants (35), en particulier contenus dans un gaz d'échappement et/ou dans de l'eau d'échappement, dans lequel la position actuelle (5) du véhicule (1) est déterminée au moyen d'un système de détermination de position (61), dans lequel il est prévu un dispositif de régulation et/ou de commande (17) au moyen duquel la quantité d'au moins l'un des polluants émis par le moteur à combustion interne (19) est réglée et/ou ajustée de façon ciblée et de manière autonome et/ou automatique au moins en fonction de la position (5) déterminée du véhicule (1) et d'informations concernant les réglementations locales en matière de pollution, en particulier les réglementations en matière de gaz d'échappement et/ou d'eau, dans lequel au moins un paramètre d'un système de post-traitement des gaz d'échappement (43) du véhicule (1) est réglé et/ou ajusté au moyen du dispositif de régulation et/ou de commande (17) pour régler et/ou ajuster la quantité de polluants, **caractérisé en ce que** ledit au moins un paramètre du système de post-traitement des gaz d'échappement (43) est au moins la quantité d'eau d'échappement dérivée d'un épurateur de gaz d'échappement du système de post-traitement des gaz d'échappement (43) et/ou la quantité d'eau d'échappement acheminée dans les eaux provenant du véhicule lorsqu'il est sous la forme d'un bateau et/ou la valeur du pH de l'eau d'échappement acheminée dans l'eau du véhicule lorsqu'il est sous la forme d'un bateau.

2. Procédé selon la revendication 1, **caractérisé en ce que** le réglage et/ou l'ajustement autonome et/ou automatique de la quantité de polluant est en outre effectué en fonction de la vitesse actuelle (v) du véhicule déterminée au moyen d'un système de détermination de vitesse (17, 61) et de la direction de déplacement actuelle (7) du véhicule déterminée au moyen d'un système de détermination de direction de déplacement (17, 61).

3. Procédé selon la revendication 1 ou 2, **caractérisé en ce que** les informations concernant les réglementations locales en matière de pollution sont stockées dans le dispositif de régulation et/ou de commande (17), et/ou **en ce que** les informations concernant les réglementations locales en matière de pollution sont transmises par au moins un dispositif d'information externe au dispositif de régulation et/ou de commande (17), et/ou **en ce que** les émissions actuelles de polluant du véhicule sont transmises par le dispositif de régulation et/ou de commande (17) à un dispositif d'information externe.

4. Procédé selon l'une des revendications précédentes, **caractérisé en ce qu'**au moins un composant du véhicule (1) ayant une influence sur la quantité de polluant du moteur à combustion interne (19) peut être amené à passer dans plusieurs modes de fonctionnement à des fins de réglage et/ou d'ajustement ciblé de la quantité de polluant au moyen du dispositif de régulation et/ou de commande (17), dans lequel la quantité déterminée de polluant du moteur à combustion interne (19) est différente dans chaque mode de fonctionnement.

5. Procédé selon l'une des revendications précédentes, **caractérisé en ce qu'**au moins un paramètre du moteur à combustion interne (19) est ajusté et/ou réglé à des fins de réglage et/ou d'ajustement de la quantité de polluant au moyen du dispositif de régulation et/ou de commande (17), dans lequel il est de préférence prévu que ledit paramètre soit le rapport carburant/air et/ou le nombre d'injections et/ou la quantité de gaz d'échappement remise en circulation au moyen d'un dispositif de remise en circulation des gaz d'échappement (33) et/ou la pression d'injection et/ou la courbe d'injection.

6. Procédé selon l'une des revendications précédentes, **caractérisé en ce que** ledit au moins un paramètre du système de post-traitement des gaz d'échappement (43) est en outre le rapport carburant/air et/ou la quantité d'agent de réduction délivrée d'un catalyseur SCR (51, 53) du système de post-traitement des gaz d'échappement (43) et/ou la régénération d'un filtre à particules (49) du système de post-traitement des gaz d'échappement (43) et/ou un débit de gaz d'échappement passant à travers un dispositif de dérivation (37) du système de post-traitement des gaz d'échappement (43).

7. Procédé selon l'une des revendications précédentes, **caractérisé en ce que** le type de carburant fourni au moteur à combustion interne (19) est réglé et/ou ajusté à des fins de réglage et/ou d'ajustement de la quantité de polluant au moyen du dispositif de régulation et/ou de commande (17).

8. Dispositif destiné au fonctionnement d'un véhicule, notamment d'un bateau, dans lequel le véhicule (1) comporte au moins un moteur à combustion interne (19) émettant des polluants (35), en particulier contenus dans un gaz d'échappement et/ou dans des eaux usées, dans lequel il est prévu un système de détermination de position (61) au moyen duquel il est possible de déterminer la position actuelle (5) du véhicule (1), dans lequel il est prévu un dispositif de régulation et/ou de commande (17) au moyen duquel la quantité d'au moins un polluant émis par le moteur à combustion interne peut être réglée et/ou ajustée de manière ciblée et de manière autonome et/ou automatique au moins en fonction de la position (5) déterminée du véhicule (1) et d'informations concernant les réglementations locales en matière de pollution, en particulier les réglementations en matière de gaz d'échappement et/ou d'eau, dans lequel un système de post-traitement des gaz d'échappement (43) du véhicule (1) comporte au moins un dispositif de réglage (41, 45, 59) pouvant être amené à passer dans plusieurs positions de réglage, dont le changement de position permet de réguler et/ou de commander au moins un paramètre du système de post-traitement des gaz d'échappement (43) ayant une influence sur la quantité de polluant, dans lequel le changement de position du dispositif de réglage (41, 45, 59) peut être régulé et/ou commandé au moyen du dispositif de régulation et/ou de commande (17), **caractérisé en ce que** ledit au moins un paramètre du système de post-traitement des gaz d'échappement (43) est au moins la quantité d'eau d'échappement passant à travers un épurateur de gaz d'échappement du système de post-traitement des gaz d'échappement (43) ou la quantité d'eau d'échappement acheminée dans l'eau du véhicule lorsqu'il est sous la forme d'un bateau et/ou la valeur du pH de l'eau d'échappement acheminée dans l'eau du véhicule lorsqu'il est réalisé sous la forme d'un bateau.

9. Dispositif selon la revendication 8, **caractérisé en ce qu'**il est prévu un système de détermination de vitesse (17, 61) destiné à déterminer la vitesse (v) du véhicule et un système de détermination de direction de déplacement (17, 61) destiné à déterminer la direction de déplacement (7) du véhicule, et **en ce que** la quantité de polluant peut en outre être réglée et/ou ajustée en fonction de la vitesse actuelle (v) déterminée du véhicule et de la direction de déplacement actuelle (7) déterminée du véhicule au moyen du dispositif de régulation et/ou de commande (17).

10. Dispositif selon la revendication 8 ou 9, **caractérisé en ce que** le dispositif de régulation et/ou de commande (17) comporte un dispositif à mémoire (65) dans lequel sont stockés les informations concernant les réglementations locales en matière de pollution et/ou **en ce que** le dispositif de régulation et/ou de commande (17) comporte un dispositif d'émission et/ou de réception (63) au moyen duquel les informations concernant les réglementations locales en matière de pollution peuvent être transmises par un dispositif d'information externe au dispositif de régulation et/ou de commande (17) et/ou au moyen duquel les émissions actuelles de polluant du véhicule sont transmises par le dispositif de régulation et/ou de commande (17) à un dispositif d'information externe.

11. Dispositif selon l'une quelconque des revendications 8 à 10, **caractérisé en ce que** le moteur à combustion interne (19) comporte au moins un dispositif de réglage (31) pouvant être mis dans plusieurs positions de réglage, dont le changement de position permet d'ajuster et/ou de régler au moins un paramètre du moteur à combustion interne (19) ayant une influence sur la quantité de polluant, dans lequel le changement de position du dispositif de réglage (31) peut être régulé et/ou commandé par le dispositif de de régulation et/ou de commande (17).

12. Dispositif selon l'une des revendications 8 à 11, **caractérisé en ce que** le système de post traitement des gaz d'échappement (43) comporte au moins un dispositif de dérivation (37) au moyen duquel au moins une partie du flux de gaz d'échappement peut être amenée à passer et/ou à être guidée vers au moins un élément de post-traitement des gaz d'échappement (47, 49, 51, 53, 55), en particulier vers au moins un catalyseur SCR et/ou vers au moins un dispositif de désulfuration du système de post-traitement des gaz d'échappement (43) et **en ce qu'**il est prévu un dispositif à soupape (45) en tant que dispositif de réglage, au moyen duquel le flux de gaz d'échappement passant à travers le dispositif de dérivation (37) et à travers ledit au moins un élément de post-traitement des gaz d'échappement (47, 49, 51, 53, 55) peut être ajusté et/ou réglé.

13. Dispositif selon l'une des revendications 8 à 12, **caractérisé en ce qu'**il est prévu un dispositif de réglage (25) pouvant être amené à passer dans plusieurs positions de réglage, dont le changement de position permet d'ajuster et/ou de régler le type de carburant fourni au moteur à combustion interne (19), dans lequel le changement de position du dispositif de réglage (25) peut être régulé et/ou commandé au moyen du dispositif de régulation et/ou de commande (17).

14. Véhicule, notamment bateau, destiné à mettre en oeuvre un procédé selon l'une des revendications 1 à 7 et/ou comportant un dispositif selon l'une des revendications 8 à 13.
